# NEW EUROPEAN PATENT SPECIFICATION

(11) **EP 2 510 251 B2**
(45) Date of publication and mention of the opposition decision: **13.01.2021**
(45) Mention of the grant of the patent: 28.06.2017
(21) Application number: 10836429.0
(22) Date of filing: 30.11.2010
(51) Int. Cl.: F16D 13/52, F16D 13/64

(54) **MULTIPLATE CLUTCH WITH A SPRING DEVICE**
MEHRPLATTENKUPPLUNG MIT EINER FEDERVORRICHTUNG
EMBRAYAGE MULTIDISQUE DOTÉ D'UN DISPOSITIF À RESSORT

(30) Priority: 07.12.2009 DE 102009057353
(43) Date of publication of application: 17.10.2012
(73) Proprietor: BorgWarner Inc., Auburn Hills, MI 48326 (US)
(72) Inventor: NICKLAS, Goetz, D-67354 Roemerberg (DE); HAUCK, Hans, Juergen, D-74523 Schwaebisch Hall (DE); PILZ, Christian, D-68723 Oftersheim (DE)
(74) Representative: Leckel, Ulf
(86) International application number: PCT/US2010/058270
(87) International publication number: WO 2011/071715

(56) References cited:
- EP-A2- 0 945 636
- EP-B1- 0 188 415
- DE-A1- 2 316 571
- DE-A1- 10 124 213
- DE-A1- 19 958 370
- FR-A1- 2 493 438
- JP-A- 2008 115 941
- US-A1- 2003 150 686
- US-A1- 2007 175 725
- US-A1- 2007 199 794
- US-A1- 2009 194 384

## Description

The present invention relates to a multiplate clutch with a first plate set connected in a rotationally fixed manner to a first plate carrier, and with a second plate set connected in a rotationally fixed manner to a second plate carrier, wherein the plates of the two plate sets are arranged consecutively in an alternating manner in the axial direction and can be brought into frictional engagement with one another.

The prior art discloses multiplate clutches which have a compressible plate pack. The plate pack comprises a first plate set which may comprise, for example, a multiplicity of outer plates and which is connected in a rotationally fixed manner to a first plate carrier, i.e., for example, to an outer plate carrier. Furthermore, the plate pack comprises a second plate set which is composed, for example, of a multiplicity of inner plates and which is connected in a rotationally fixed manner to a second plate carrier, i.e., for example, to an inner plate carrier. The plates of the two plate sets are arranged consecutively in an alternating manner in the axial direction and can be brought into frictional engagement by compression of the plate pack in order to transfer the multiplate clutch from an open state into a closed state, wherein, in the last-mentioned state, a torque can be transmitted from the first plate carrier to the second plate carrier via the plate pack.

The known multiplate clutches have proven successful, but are disadvantageous insofar as, even in the open state of the multiplate clutch, a relatively large torque, the "drag torque", is still transmitted from the plates of the first plate set to the plates of the second plate set, or vice versa. Said drag torque is particularly pronounced in particular in wet running multiplate clutches.

An accordingly improved embodiment of the known multiplate clutch described above is disclosed in EP 0188415 B1, DE 10 2007 056 745 A1 or US 2003/0150686 A1. In said substantially structurally identical multiplate clutch, the plates of the second plate set have a bent shape or an undulating shape in the radial direction thereof. This enables the plates of the second plate set to be elastically compressed in the axial direction in the closed state of the multiplate clutch such that it may also be said that the plates of the second plate set are of resilient design in the axial direction. If the multiplate clutch is subsequently transferred from the closed state into the open state, the restoring force of the resiliently designed plates of the second plate set causes the plates of the second plate set to be expanded again in the axial direction and those plates of the first plate set which are adjacent to the respective plate of the second plate set to be pressed apart in the axial direction. However, it has been shown that, even after expansion of the resiliently designed plates of the second plate set in the axial direction, a relatively high drag moment is still transmitted between the plates of the first plate set and the plates of the second plate set.

An alternative solution to plates having a bend shape or undulating shape consists in providing spring devices in axial direction between two adjacent plates of the same set of plates, i.e. the first or the second plate set mentioned above. Such multiplate clutches are for example disclosed in EP 0 945 636 A2, DE 199 58 370 A1 and DE 2 316 571 A1. In contrast to multiplate clutches having plates with a bend shape or undulating shape, a more significant reduction of drag torque could be achieved. However, a drawback consists in that the spring devices have to have a particular high spring stiffness in order to ensure a rapid stretching apart of the two adjacent plates, which will ultimately signify a structural limitation. Thus, the high spring stiffness results in larger dimensions and an increased wear in the area of the spring devices.

It is therefore an object of the present invention to provide a multiplate clutch of the generic type, in which the drag torque in the open state of the multiplate clutch is reduced and the disadvantages mentioned before could be overcome.

This object is achieved by the features indicated in patent claim 1. Advantageous embodiments of the invention are the subject matter of the dependent claims.

The present invention relates to a multiplate clutch, wherein the multiplate clutch is a wet running multiplate clutch, between the plates of which, for example, oil is effective for cooling and lubrication purposes. It is furthermore preferred if the multiplate clutch is designed as a multiple plate clutch, i.e., for example, as a double plate clutch. Furthermore, it is particularly preferred if the multiplate clutch according to the invention is hydraulically actuable. The multiplate clutch has a first plate set which comprises at least two plates which may be designed, for example, as outer or inner plates, and a second plate set which has at least one plate designed as an inner or outer plate. In this case, the plates of the two plate sets mentioned are preferably of annular-disk-shaped design and particularly preferably have an outer toothing or an inner toothing, and an outer plate would be involved in the case mentioned first and an inner plate would be involved in the case mentioned second.

The plates of the first plate set are connected in a rotationally fixed manner to a first plate carrier, which may be, for example, an outer plate carrier or an inner plate carrier, while the plates of the second plate set are connected in a rotationally fixed manner to a second plate carrier, which may be, for example, an inner or outer plate carrier. The outer or inner toothings mentioned previously can bring about the rotationally fixed connection here to the respective plate carrier. The plates of the two plate sets are arranged consecutively in an alternating manner in the axial direction, in which case it may also be said that the two plate sets intermesh in the manner of a comb. Furthermore, the plates of the two plate sets can be brought into frictional engagement with one another in the axial direction, the frictional engagement preferably taking place directly. For this purpose, the plates of the two plate sets are preferably arranged in an axially displaceable manner on the respective plate carrier. In the case of a hydraulically actuable multiplate clutch, the plates could be brought into frictional engagement with one another, for example by means of an axially displaceable actuating piston. According to the invention, at least one spring device is provided for at least one pair of plates consisting of two adjacent plates of the first plate set. A pair of plates within the context of the invention is consequently to be understood as meaning a pair consisting of two plates, which are adjacent in the axial direction, of the same first plate set. In this case, the spring device is designed in such a manner that, when the multiplate clutch is open, the two adjacent plates of the pair of plates are spaced apart from each other in the axial direction, forming an axial spacing, wherein said axial spacing is greater than the width of the unstressed in-between plate of the second plate set in the axial direction. In this case, the open state of the multiplate clutch should be understood as meaning the state of the multiplate clutch, in which the plates of the two plate sets are not actively brought into frictional engagement with one another. The in-between plate is of elastically deformable or resilient design in the axial direction, preferably also in the circumferential direction and/or radial direction. The width of the in-between plate of the second plate set here denotes the extent of the in-between plate in the axial direction. Since the in-between plate of the second plate set is a plate which is of elastically deformable or resilient design in the axial direction, the width of the in-between plate denotes the extent of the abovementioned plate of elastically deformable or resilient design, when said plate is relaxed, i.e. is neither elastically compressed nor elastically stretched.

Since, when the multiplate clutch is open, the spring device spaces the two adjacent plates of the pair of plates apart, forming an axial spacing which is greater than the width of the unstressed in-between plate of the second plate set in the axial direction, when the multiplate clutch is open, the two plates of the pair of plates can be separated from the in-between plate such that frictional engagement between the abovementioned plates is substantially prevented and a particularly low drag torque is obtained in the open state of the multiplate clutch. There is therefore a more significant reduction of the drag torque than is the case in the multiplate clutch according to DE 10 2007 056 745 A1, in which the axial spacing between the two adjacent plates of the first plate set is created by the in-between plate which is of axially resilient design such that the axial spacing between the two adjacent plates of the first plate set corresponds to the width of the in-between unstressed plate of the second plate set in the axial direction, and therefore the drag torque can be reduced only to an insufficient extent. Further, if the multiplate clutch according to the invention is closed, both the spring device and the in-between plate are elastically compressed in the axial direction. If the multiplate clutch is subsequently opened, the restoring force of the spring device and the restoring force of the elastically deformed in-between plate first of all cause the two adjacent plates of the pair of plates to be stretched apart. The addition of said two restoring forces therefore causes a particularly rapid and smooth stretching apart of the two adjacent plates of the pair of plates without the spring device having to have a particularly high spring stiffness, which would ultimately signify a structural limitation. If the spacing between the adjacent plates of the pair of plates corresponds to the width of the in-between plate, then, subsequently, only the restoring force of the spring device brings about an increase in the axial spacing between the adjacent plates of the pair of plates until said axial spacing is greater than the width of the in-between plate. As already indicated previously, in this embodiment, the width of the in-between plate should be understood as meaning the maximum extent of the in-between and unstressed plate in the axial direction. If a plate has an undulating or stepped profile, said width in the unstressed state would correspond, for example, to the spacing between the lowest wave or step trough and the highest wave or step peak in the axial direction.

The in-between plate has an undulating or stepped profile, preferably a sinusoidal profile, in the circumferential direction and/or in the radial direction. Preference is also given in the in-between plate to an undulating or stepped profile in the circumferential direction, wherein the wave or step peaks should preferably be spaced apart in the axial direction from the wave or step troughs. Otherwise, reference should be made to the following description of the spring device of elastically deformable or resilient design, said description applying correspondingly to the in-between plate which is of elastically deformable or resilient design.

When the multiplate clutch is closed, the restoring force of the spring device in the axial direction is smaller than, greater than or equal to the restoring force of the elastically deformable or resiliently designed in-between plate in the axial direction. With regard to the advantages thereof, reference should be made to the advantages of the described embodiments relating to the spring stiffness of the spring device and the spring stiffness of the elastically deformable or resiliently designed in-between plate.

In a preferred embodiment of the multiplate clutch according to the invention, the previously described concept is also applied to at least one pair of plates consisting of two adjacent plates of the second plate set, i.e. of the other plate set. In this preferred embodiment of the multiplate clutch according to the invention, at least one spring device is furthermore provided for at least one pair of plates consisting of two adjacent plates of the second plate set, by means of which, when the multiplate clutch is open, the two adjacent plates of the pair of plates can be spaced apart from each other in the axial direction, forming an axial spacing which is greater than the width of the in-between and optionally unstressed plate of the first plate set in the axial direction. In this embodiment, there is therefore not only a targeted separation of the plates of the first plate set but rather also a targeted separation of the plates of the second plate set in the axial direction. In this embodiment, it is furthermore particularly preferred if the spring devices for the first and second plate sets are coordinated with each other in such a manner that the plates of the first plate set are completely separated from the plates of the second plate set, and therefore there is no frictional connection whatsoever between said plates, and the drag torque is therefore reduced even more significantly.

It is apparent from the preceding description that even the use of a spring device in individual pairs of plates of the respective plate set may result in a reduction of the drag torque. In order, however, to obtain the greatest possible reduction of the drag torque with the aid of the spring device or spring devices, in a further preferred embodiment of the multiplate clutch according to the invention, at least one spring device is provided for all of the pairs of plates consisting of adjacent plates of the first and/or second plate set. It has also proven advantageous in this connection if each pair of plates is assigned a spring device which is formed separately from the spring devices of the other pairs of plates.

According to a further preferred embodiment of the multiplate clutch according to the invention, the spring device is arranged in the axial direction between the mutually facing sides of the plates of the respective pair of plates. In this embodiment, it is furthermore preferred if the respective spring device is arranged in the axial direction completely between the mutually facing sides of the plates of the respective pair of plates in order to obtain a particularly compact construction of the multiplate clutch. In this embodiment, it is furthermore particularly preferred if the spring device can be or is supported in the axial direction directly on the mutually facing sides of the plates of the respective pair of plates, in order to obtain a simple and compact construction. Owing to the direct support or supportability of the spring device on the mutually facing sides of the plates of the respective pair of plates, the restoring force of the spring device can furthermore act directly on the abovementioned plates without the axial overall length of the multiplate clutch being increased by additional in-between support means and the effective length of the spring device in the axial direction being restricted.

In order, when the multiplate clutch is open, to substantially prevent frictional engagement between the plates of the two plate sets and to reduce the drag torque, the spring length of the unstressed spring device in the axial direction, in an advantageous embodiment of the multiplate clutch according to the invention, is greater than the width of the in-between and optionally unstressed plate in the axial direction. With regard to reducing the drag torque, it has proven advantageous if the spring length of the unstressed spring device in the axial direction is at least 110% or at least 125% of the width of the in-between and optionally unstressed plate in the axial direction, as is preferred in the present embodiment. In order, firstly, to significantly reduce the drag torque without, secondly, creating a multiplate clutch with a very large axial overall length, it is furthermore particularly preferred, in this embodiment, if the spring length of the unstressed spring device in the axial direction is at maximum 150% of the width of the in-between and optionally unstressed plate.

In principle, the spring device could be arranged in the radial direction outside the plate-supporting section of the one plate carrier, which is designed as an outer plate carrier, or radially within the plate-supporting section of the other plate carrier, which is designed as an inner plate carrier, in order to be able to act on radial projections on the respective plates, such as, for example, the outer toothing or inner toothing. In order, however, to obtain an easy-to-install and compact construction, on the one hand, and, on the other hand, to achieve a force application of the spring device, which brings about simple and targeted stretching apart of the mutually adjacent plates of the respective pair of plates, the spring device, in a particularly advantageous embodiment of the multiplate clutch according to the invention, is arranged in the radial direction between the first and second plate carrier, particularly preferably between the plate-supporting sections of the first and second plate carrier. In order to further reinforce the previously mentioned effects, the spring device is particularly preferably arranged in the radial direction completely between the first and second plate carrier or between the plate-supporting sections of the first and second plate carrier.

In principle, the spring device, which may be, for example, of annular or annular-disk-shaped design, could be inserted loosely into the multiplate clutch such that said spring device is movable in the radial direction. In order, however, to prevent collision of the spring device with the in-between plates, to obtain a predetermined and uniform force introduction region and to avoid imbalances and production of noise, the spring device, in a further preferred embodiment of the multiplate clutch according to the invention, can be or is supported in the radial direction on the first or second plate carrier, preferably on the plate-supporting section of the respective plate carrier. In this embodiment, there does not inevitably have to be a rotationally fixed connection between the spring device and the respective plate carrier or plate-supporting section, and therefore the spring device can be rotated relative to the plates, assigned to the spring device, of the pair of plates of the same plate set. In order, however, to achieve a constant rotational position of the spring device relative to the plates, assigned to the spring device, of the pair of plates, said rotational position opposing wear on the abovementioned parts and leading to constant force introduction regions on the plates, in this embodiment the spring device is preferably connected in a rotationally fixed manner, particularly preferably in a form-fitting manner, to the respective plate carrier or plate-supporting section of the plate carrier. The spring device may, for example, have an outer or inner toothing, in a similar manner to the plates of the plate sets, in order to be connected in a form-fitting manner to the plate-supporting section of the respective plate carrier.

In a further preferred embodiment of the multiplate clutch according to the invention, the spring device is of annular or annular-disk-shaped design. By means of the annular or annular-disk-shaped design of the spring device, the restoring force of same can be transmitted relatively uniformly to the adjacent plates, which are of likewise annular or annular-disk-shaped design, of the pair of plates without the abovementioned plates tilting in relation to the axis of rotation or executing a wobbling movement. A relatively rapid and drag-torque-free stretching apart of the mutually adjacent plates of the pair of plates can therefore be obtained. In this case, the spring device may in principle be manufactured from any material, it being preferred in respect of a low amount of wear and effective resilience if the spring device is composed of metal, particularly preferably of steel. An annular or annular-disk-shaped spring device composed of metal and/or steel has thus proven to be particularly effective.

In principle, the spring device could be designed as part of the in-between plate by being connected, for example, to the in-between plate or even being formed integrally therewith. However, since, according to the invention, the axial spacing brought about by the spring device is intended to be greater than the width of the in-between and optionally unstressed plate, the manufacturing of such a combination of in-between plate and spring device would be considerably more difficult. Furthermore, in the case of an in-between plate which is optionally of elastically deformable or resilient design in the axial direction, it is extremely difficult to achieve different spring stiffnesses for the in-between plate and the spring device in a combination of this type. For this reason, in a further particularly advantageous embodiment of the multiplate clutch according to the invention, the spring device is formed separately from the in-between plate and is preferably spaced apart therefrom. The spacing-apart of the spring device from the in-between plate not only simplifies the installation but also prevents the in-between plate from having a negative effect on the restoring force provided by the spring device. Furthermore, the separate formation of the spring device and in-between plate permits greater flexibility in the production of the multiplate clutch, particularly since different spring devices, which differ, for example, in the spring stiffness thereof, can be used for one and the same clutch without the in-between plates having to be replaced or changed. In other words, in this embodiment, a clear functional separation between the in-between plate, on the one hand, and the spring device, on the other hand, is obtained, the latter serving exclusively to produce the axial spacing between the mutually adjacent plates of the pair of plates while the in-between plate serves for the mutual frictional engagement and optionally additionally for the stretching apart of the mutually adjacent plates of the pair of plates, as is explained in more detail later on. In this embodiment, it is furthermore particularly preferred if the spring device of annular or annular-disk-shaped design is arranged in a nested fashion in the radial direction with the in-between plate. The annular or annular-disk-shaped spring device should either be arranged in the radial direction outside the in-between plate or in the radial direction within the in-between plate.

So that, after the multiplate clutch is opened, the spring device can automatically produce the axial spacing in the axial direction between the two adjacent plates of the pair of plates, the spring device, in a further advantageous embodiment of the multiplate clutch according to the invention, is of elastically deformable or resilient design in the axial direction, preferably also in the circumferential direction and/or radial direction. This enables the spring device to be elastically or resiliently expanded, for example in the circumferential direction and/or in the radial direction, as a result of axial compression, and therefore high fatigue strength of the spring device can be obtained, said fatigue strength being particularly high in the event of elastic deformability or resilient design in the radial direction.

In order to be able to provide the elastic deformability or resilient design of the spring device in the axial direction in a particularly simple manner, the annular or annular-disk-shaped spring device, in a further preferred embodiment of the multiplate clutch according to the invention, has an undulating or stepped profile in the circumferential direction and/or in the radial direction. In order, in this case, firstly to obtain a low width of the annular or annular-disk-shaped spring device in the radial direction and, secondly, to achieve a relatively high spring stiffness, precedence should be given to the undulating or stepped profile in the circumferential direction although said profile can be combined in an advantageous manner with an undulating or stepped profile in the radial direction. The undulating or stepped profile in the circumferential direction should also be selected in such a manner that the wave troughs and peaks or step troughs and peaks formed by this means are spaced apart from one another in the axial direction. Should an undulating or stepped profile be selected, it is furthermore preferred, in this embodiment, if said profile is of sinusoidal design. As an alternative or in addition, the annular or annular-disk-shaped spring device may be of conical design in the axial direction and therefore may be designed in the manner of a disk spring. However, an undulating or stepped profile in the circumferential direction is also given precedence here in order to obtain a relatively high spring stiffness in a relatively short radial section although a combination of the undulating or stepped profile with the conical design of the annular or annular-disk-shaped spring device is also advantageous here.

In a further advantageous embodiment of the plate according to the invention, the spring stiffness of the spring device in the axial direction is smaller than, greater than or equal to the spring stiffness of the elastically deformable or resiliently designed in-between plate in the axial direction. In this embodiment, in particular multiplate clutches, in which the spring stiffness of the spring device in the axial direction is designed to be smaller or greater than the spring stiffness of the elastically deformable or resiliently designed in-between plate in the axial direction, have proven advantageous. In this embodiment, it is furthermore particularly preferred if the spring stiffness of the spring device is smaller than the spring stiffness of the elastically deformable or resiliently designed in-between plate in the axial direction. This preferred embodiment is advantageous insofar as, when the clutch is closed, the two adjacent plates of the pair of plates can first of all be compressed in a relatively simple manner counter to the restoring force of the spring device until the spacing between the adjacent plates of the pair of plates corresponds to the width of the in-between plate. Only then do the two abovementioned adjacent plates have to be compressed counter to the restoring force both of the spring device and of the elastically deformable or resiliently designed in-between plate. By contrast, when the multiplate clutch is opened, the relatively small spring stiffness and the resultant smaller restoring force of the spring device suffice in order to space the two adjacent plates of the pair of plates apart in the axial direction, forming the axial spacing which is greater than the width of the in-between and unstressed plate in the axial direction.

In order to ensure uniform support and force transmission between the spring device and the in-between plate, on the one hand, and the adjacent plates of the pair of plates, on the other hand, the undulating or stepped profile of the spring device and/or of the in-between plate, in a further advantageous embodiment of the multiplate clutch according to the invention, has at least two, preferably three, particularly preferably more than three, wave or step peaks and the same number of wave or step troughs.

In a further advantageous embodiment of the multiplate clutch according to the invention, the plates of the first or second plate set, preferably of the first plate set, are designed as steel plates, particularly preferably as flat steel plates, while the plates of the other plate set, preferably of the second plate set, are designed as friction lining plates, preferably as friction lining plates having an undulating or stepped profile and having a friction lining carrier and at least one friction lining arranged on the friction lining carrier. The friction lining may thus be arranged both on one side and on both sides of the friction lining carrier. In this embodiment, the undulating or stepped profile of the friction lining plate may be provided, for example, by a corresponding undulating or stepped profile of the friction lining, but it is preferred, in this embodiment, if the friction lining carrier itself has an undulating or stepped profile which is followed by the friction lining arranged thereon, particularly since a particularly high spring stiffness of the friction lining plate, which is elastically deformable or is of resilient design in the axial direction, can be obtained by this means.

The invention is explained in more detail below using an exemplary embodiment and with reference to the attached drawings, in which:
Fig. 1 shows a partial side view of an embodiment of the multiplate clutch according to the invention in a sectioned illustration,
Fig. 2 shows an enlarged illustration of the detail A from fig. 1 when the multiplate clutch is open,
Fig. 3 shows an enlarged illustration of the detail A from fig. 1 during the closing or opening of the multiplate clutch,
Fig. 4 shows an enlarged illustration of the detail A from fig. 1 when the multiplate clutch is closed,
Fig. 5 shows a partial side view of the spring device from the preceding figures, and
Fig. 6 shows a partial side view of a plate of the second plate set from figs 1 to 4.

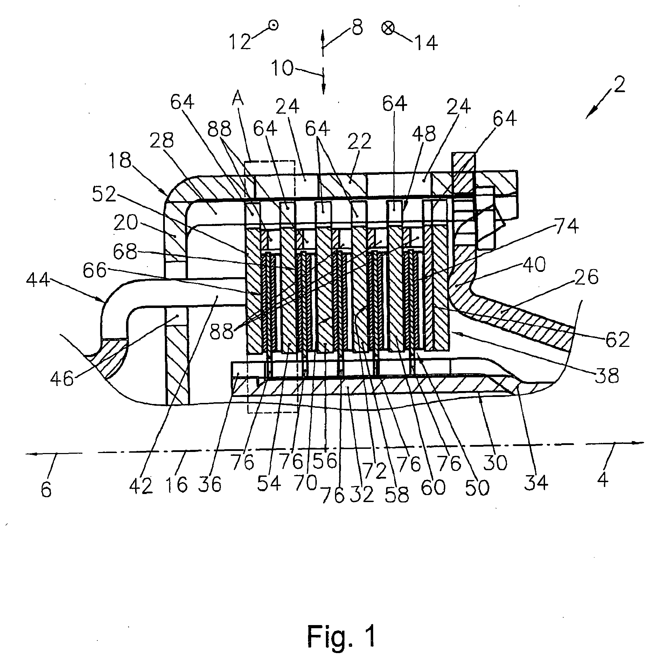

Fig. 1 shows a side view of an embodiment of the multiplate clutch 2 according to the invention, the latter, in the present example, being a wet running multiplate clutch 2 which is hydraulically actuable. In fig. 1, the mutually opposed axial directions 4, 6, the mutually opposed radial directions 8, 10 and the mutually opposed circumferential directions 12, 14 of the multiplate clutch 2 are indicated with reference to corresponding arrows, with the axis of rotation 16 of the multiplate clutch 2 extending in the axial direction 4, 6.

The multiplate clutch 2 has a first plate carrier 18 which is substantially composed of a radial support section 20 extending in the radial direction 8, 10 and of a tubular plate-supporting section 22, said sections being formed integrally with each other. Cutouts 24 serving for the passage of cooling and lubricating oil (not illustrated) of the wet running multiplate clutch 2 are furthermore provided in the plate-supporting section 22. At the end thereof which points in the axial direction, the tubular plate-supporting section 22 is in rotationally driving connection with a driver disk 26 which, for its part, is indirectly or directly in rotationally driving connection with the drive shaft of a drive unit (not illustrated). The tubular plate-supporting section 22 furthermore has an inner toothing 28 for producing a rotationally fixed connection between the plate-supporting section 22 and the plates described in more detail further on.

The first plate carrier 18, which is designed as an outer plate carrier, is assigned a second plate carrier 30, which is designed as an inner plate carrier. The second plate carrier 30 is composed in turn of a tubular plate-supporting section 32 and a radial support section 34, which adjoins the latter in the axial direction 4 and is merely indicated in fig. 1, said sections again being formed integrally with each other. In this case, the plate-supporting section 32 is arranged in a nested fashion in the radial direction 8, 10 with the plate-supporting section 22 of the first plate carrier 18. The plate-supporting section 32 in turn also has a toothing, wherein the toothing is an outer toothing 36 which faces the inner toothing 28 in the radial direction 8. Cutouts in the manner of the cutouts 24 within the plate-supporting section 22 are also provided in the plate-supporting section 32 of the second plate carrier 30 in order to permit the cooling or lubricating oil to flow through the plate-supporting section 32, although the illustration of said cutouts has been omitted in fig. 1. The radial support section 24 can be connected, for example indirectly or directly, to a transmission input shaft (not illustrated) in a rotationally fixed manner.

A plate pack 38 is arranged in the radial direction 8, 10 between the radially nested plate-supporting sections 22, 32. The plate pack 38 can be supported in the axial direction 4 on a stop 40 of the driver disk 26. By contrast, in the opposite axial direction 6, the plate pack 38 can be supported on support fingers 42 of an actuating piston 44. The actuating piston 44 is driveable hydraulically such that said actuating piston can be displaced in the axial directions 4, 6. The support fingers 42 extending in the axial direction 4 through cutouts 46 in the radial support section 20 of the first plate carrier 18, in conjunction with the stop 40 on the driver disk 26, can therefore bring about compression of the plate pack 38 when the actuating piston 44 is displaced hydraulically in the axial direction 4. In this case, a closed multiplate clutch 2 is referred to below, fig. 1 showing the open state, i.e. an open multiplate clutch 2.

The plate pack 38 is composed of a first plate set 48 and a second plate set 50. The first plate set 48 comprises a multiplicity of annular-disk-shaped, flat steel plates 52 to 62 which each have an outer toothing 64. In this case, the outer toothings 64 of the steel plates 52 to 62 engage in the inner toothing 28 of the plate-supporting section 22 of the first plate carrier 18 such that the steel plates 52 to 62 of the first plate set 48 are connected in a rotationally fixed manner to the first plate carrier 18 but can be displaced along same in the axial direction 4 or 6. The steel plates 52 to 62 are accordingly the outer plates of the multiplate clutch 2. By contrast, the second plate set 50 comprises a plurality of friction lining plates 66 to 74 which are designed as inner plates, are likewise of substantially annular-disk-shaped design and each have an inner toothing 76. In this case, the inner toothing 76 of the friction lining plates 66 to 74 engages in the outer toothing 36 of the plate-supporting section 32 of the second plate carrier 30 such that the abovementioned friction lining plates 66 to 74 of the second plate set 50 are connected in a rotationally fixed manner to the second plate carrier 30 but are likewise displaceable in the axial direction 4, 6 relative to the second plate carrier 30.

The steel plates 52 to 62 of the first plate set 48 and the friction lining plates 66 to 74 of the second plate set 50 are arranged consecutively in an alternating manner in the axial direction 4 or 6 and can therefore be brought directly into frictional engagement with one another via the actuating piston 44 such that a torque can be transmitted from the first plate carrier 18, which is designed as an outer plate carrier, via the plate pack 38 to the second plate carrier 30, which is designed as an inner plate carrier. The steel plates 52 and 54, 54 and 56, 56 and 58, 58 and 60, and 60 and 62, which are each arranged adjacent to one another, each form a pair of plates of the first plate set 48, with a respective friction lining plate 66, 68, 70, 72 or 74 extending in the radial direction 8 between the steel plates of the respective pair of plates.

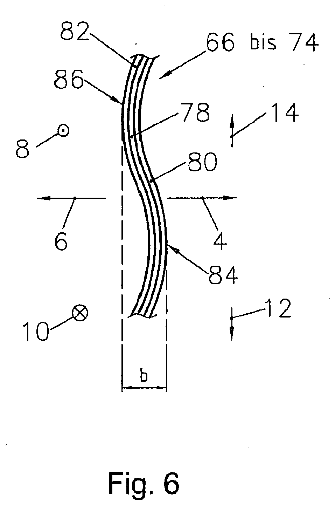

As is apparent in particular from fig. 6, which shows a partial side view of the friction lining plates 66 to 74, the friction lining plates 66 to 74 each comprise an annular-disk-shaped friction lining carrier 78 on which the inner toothing 76 is provided, wherein a friction lining 80, 82, which is preferably a paper friction lining, is arranged on both sides of the friction lining carrier 78. The in-between friction lining plate 66 to 74 here is of elastically deformable or resilient design in the axial direction 4, 6, preferably also in the circumferential direction 12, 14 and/or radial direction 8, 10. This is achieved by the in-between friction lining plate 66 to 74 having an undulating, preferably sinusoidal, profile in the circumferential direction 12, 14. As an alternative, the in-between friction lining plate 66 to 74 could also have a stepped profile. It would also be conceivable, as an alternative or in addition, if the in-between friction lining plate 66 to 74 has an undulating or stepped profile in the radial direction 8, 10 although the undulating or stepped profile in the circumferential direction 12, 14, as shown in fig. 6, is preferred. In the embodiment illustrated, the undulating or stepped profile in the circumferential direction 12, 14 is brought about by an undulating or stepped profile of the friction lining carrier 78 which is followed by the friction linings 80, 82 arranged thereon. Owing to the undulating or stepped profile of the in-between friction lining plate 66 to 74, the friction lining plate 66 to 74 has at least two, preferably three, particularly preferably more than three, wave or step peaks 84 and the same number of wave or step troughs 86, wherein the wave or step peaks 84 protrude in the axial direction 4, while the wave or step troughs 86 protrude in the axial direction 6. The width, i.e. the extent of the respective friction lining plate 66 to 74 in the axial direction 4, 6, of the unstressed, i.e. neither axially compressed nor axially extended, friction lining plate 66 to 74 is indicated in fig. 6 with reference to the designation b, wherein the abovementioned width b corresponds to the spacing in the axial direction 4, 6 between the highest wave or step peak 84 and the lowest wave or step trough 86.

As is apparent from fig. 1, a spring device 88 is furthermore arranged in each case in the axial direction 4, 6 between the two adjacent steel plates of the abovementioned pairs of plates of the first plate set 48, wherein the spring device 88 in the axial direction 4, 6 is arranged completely between the mutually facing sides of the steel plates of the respective pair of plates and can be or is supported directly on the mutually facing sides of the steel plates of the respective pair of plates. In this case, the spring devices 88 in the radial direction 8, 10 are arranged completely between the first and second plate carrier 18, 30, or more precisely between the plate-supporting sections 22, 32 of the plate carriers 18, 30. The spring devices 88 can be or are each also supported in the radial direction 8 on the first plate carrier 18, or more precisely on the plate-supporting section 22 thereof. In addition thereto, it is preferred if the spring devices 88 are connected in a rotationally fixed manner, particularly preferably in a form-fitting manner, to the plate-supporting section 22 of the first plate carrier 18, this being able to be brought about, for example, by a corresponding outer toothing (not illustrated) on the spring device 88, said outer toothing engaging in the inner toothing 28 on the plate-supporting section 22 of the first plate carrier 18.

The spring devices 88 are of annular or annular-disk-shaped design, the spring devices 88 preferably being composed of metal, particularly preferably of steel. As is apparent in particular from fig. 1, the spring devices 88 are each formed separately from the in-between friction lining plate 66 to 74 and are spaced apart therefrom in the radial direction 8. The annular or annular-disk-shaped spring devices 88 in the radial direction 8, 10 are also arranged in a nested fashion with the in-between friction lining plate 66 to 74 in each case such that the spring device 88 encloses or surrounds the associated in-between friction lining plate 66 to 74 in the radial direction 8.

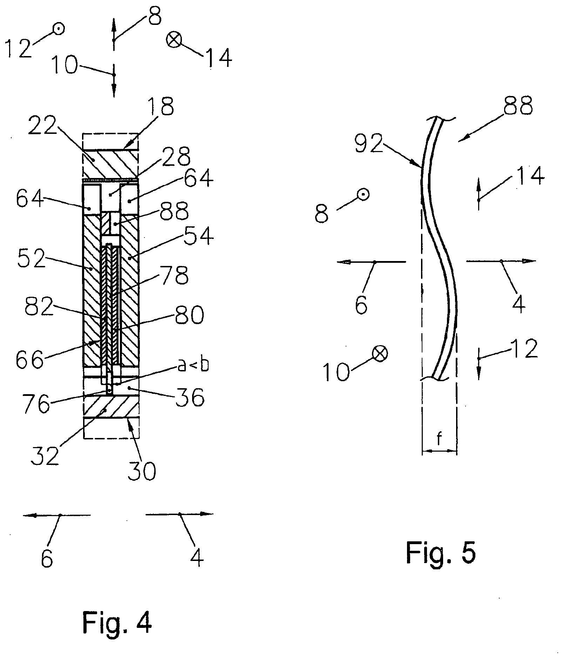

In order to bring about a resilient spacing of the steel plates 52 to 62 of the respective pair of plates in the axial direction 4, 6, the spring devices 88 are of elastically deformable or resilient design in the axial direction 4, 6, preferably also in the circumferential direction 12, 14 and/or radial direction 8, 10. As is apparent from fig. 5, which shows a partial side view of the spring device 88, the spring devices 88, which are of annular or annular-disk-shaped design, have an undulating or stepped profile, preferably a sinusoidal profile, in the circumferential direction 12, 14. As an alternative or in addition, the undulating or stepped profile can also extend in the radial direction 8, 10 although the undulating or stepped profile in the circumferential direction 12, 14 is preferred. Furthermore, as an alternative or in addition, the respective spring device 88 may also be of conical design in the axial direction 4, 6 although the undulating or stepped profile in the circumferential direction 12, 14 is also preferred here or should be provided as the basic shape.

Owing to the undulating or stepped profile of the spring device 88, the spring devices 88 have at least two, preferably three, particularly preferably more than three, wave or step peaks 90 which protrude in the axial direction 4, and the same number of wave or step troughs 92 which protrude in the axial direction 6. The spring length f of the unstressed and therefore neither compressed nor extended spring device 88 in the axial direction 4, 6 is greater here than the width b of the in-between and unstressed friction lining plate 66 to 74 in the axial direction 4, 6. The spring length f is also measured here in accordance with the spacing between the highest wave or step peak 90 and the lowest wave or step trough 92 in the axial direction 4, 6. The spring length f here is at least 110%, preferably at least 125% and particularly preferably at maximum 150% of the width b of the in-between friction lining plate 66 to 74.

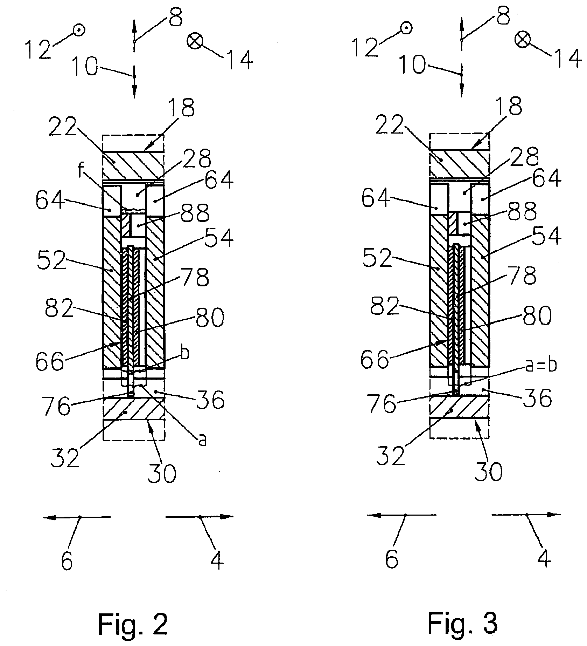

Further features of the invention and the functioning thereof are described below with reference to figs 1 to 4. Although figs 2 to 4 only show the manner of operation in the region of the pair of plates consisting of the adjacent steel plates 52 and 54, the description below also applies in a corresponding manner to the other pairs of plates and to the rest of the multiplate clutch 2.

In figs 1 and 2, the multiplate clutch 2 is in an open state in which the steel plates 52 to 62 and the friction lining plates 66 to 74 are not in frictional engagement, and therefore basically no torque can be transmitted from the first plate carrier 18 to the second plate carrier 30. The spring length f of the spring device 88 in the axial direction 4, 6 causes an axial spacing a to be formed between the mutually facing sides of the steel plates 52 and 54 in the axial direction 4, 6, wherein said axial spacing a substantially corresponds to the spring length f when the spring device 88 is unstressed and is greater than the width b of the unstressed friction lining plate 66 in the axial direction 4, 6. Owing to said size ratio, namely that a > b, a drag torque between the steel plates 52 to 62 and the friction lining plates 66 to 74 of the wet running multiplate clutch 2 is substantially suppressed.

If the multiplate clutch 2 is to be closed, the actuating piston 44 of the multiplate clutch 2 is displaced hydraulically in the axial direction 4 such that the plate pack 38 and the steel and friction lining plates 52 to 62, 66 to 74 thereof are compressed in the axial direction 4, 6. As is apparent from fig. 3, the spring device 88 is first of all compressed sharply in the axial direction 4, 6 such that the mutually facing sides of the steel plates 52, 54 are adjacent to those sides of the friction lining plate 66 which face the steel plates 52, 54. Until this moment, the steel plates 52, 54 have had to be compressed by the actuating piston 44 merely counter to the restoring force of the spring device 88.

If the steel plates 52, 54 are compressed even more sharply in the axial direction 4, 6 during the course of the further closing operation, said compression takes place both counter to the restoring force of the spring device 88 and counter to the restoring force of the friction lining plate 66, which is of elastically deformable or resilient design, as indicated in fig. 4. It is advantageous here if, in the final closed position of the multiplate clutch 2, the friction lining plate 66 is completely compressed in the axial direction 4, 6 such that the wave or step peaks 84 and the wave or step troughs 86 disappear (not illustrated).

By contrast, during opening of the multiplate clutch 2, the actuating piston 44 is displaced again in the axial direction 6 such that, first of all, both the restoring force of the spring device 88 and the restoring force of the elastically deformed in-between friction lining plate 66 bring about an increase in the spacing between the steel plates 52 and 54 in the axial direction 4, 6. This first sequence of movement is illustrated with reference to figs 4 and 3. If the spacing between the steel plates 52, 54 in the axial direction 4, 6 corresponds to the width b of the unstressed friction lining plate 66, the subsequent separation of the friction surfaces of the steel plates 52, 54 and of the friction lining plate 66 is brought about only via the spring device 88 having the greater spring length f, as is apparent with reference to figs 3 and 2. It is clear therefrom that, in the first phase of the separation, the steel plates 52, 54 can be particularly rapidly spaced apart from each other by both the spring device 88 and the elastically deformed friction lining plate 66 causing the steel plates 52, 54 to be stretched apart.

In the previously described embodiment, the spring stiffness of the spring device 88 in the axial direction 4, 6 may be smaller than, greater than or equal to the spring stiffness of the elastically deformable or resiliently designed in-between friction lining plate 66 in the axial direction 4, 6. However, it has been shown that, depending on the embodiment, it is advantageous if the spring stiffness of the spring device 88 in the axial direction 4, 6 differs from the spring stiffness of the elastically deformable or resiliently designed in-between friction lining plate 66 in the axial direction 4, 6, or is designed to be greater than or smaller than said spring stiffness. In this connection, it has proven particularly advantageous in most embodiments if the spring stiffness of the spring device 88 in the axial direction 4, 6 is smaller than the spring stiffness of the elastically deformable or resiliently designed in-between friction lining plate 66 in the axial direction 4, 6.

Furthermore, when the multiplate clutch 2 is closed, the restoring force of the spring device 88 in the axial direction 4, 6 is greater than the restoring force of the elastically deformable or resiliently designed in-between friction lining plate 66 in the axial direction 4, 6.

Although not illustrated in figs 1 to 4, it is furthermore possible for corresponding spring devices 88 to be provided for the pairs of plates consisting of the two adjacent friction lining plates 66 and 68, 68 and 70, 70 and 72, 72 and 74 of the second plate set 50, by means of which, when the multiplate clutch 2 is open, the adjacent friction lining plates 66 to 74 of the respective pair of plates can be spaced apart from one another in the axial direction 4, 6, forming an axial spacing which is greater than the width of the in-between steel plates 52 to 62 of the first plate set 48 in the axial direction 4, 6. Additional spring devices of this type could then be supported in a corresponding manner on the plate-supporting section 32 of the second plate carrier 30 and could be arranged in a nested fashion with the steel plates 52 to 62 in the radial direction 8, 10. Otherwise, the statements regarding the spring devices 88 between the steel plates 52 to 62 would apply in a corresponding manner to the spring devices between the friction lining plates 66 to 74, wherein, in this specific case, care would need to be taken to ensure that the spring devices having the undulating or stepped profile in the axial direction 4, 6 are adjacent to a region of flat design of the friction lining plates 66 to 74.

### List of Designations

- 2: Multiplate clutch
- 4: Axial direction
- 6: Axial direction
- 8: Radial direction
- 10: Radial direction
- 12: Circumferential direction
- 14: Circumferential direction
- 16: Axis of rotation
- 18: First plate carrier
- 20: Radial support section
- 22: Plate-supporting section
- 24: Cutouts
- 26: Driver disk
- 28: Inner toothing
- 30: Second plate carrier
- 32: Plate-supporting section
- 34: Radial support section
- 36: Outer toothing
- 38: Plate pack
- 40: Stop
- 42: Support finger
- 44: Actuating piston
- 46: Cutouts
- 48: First plate set
- 50: Second plate set
- 52: Steel plate
- 54: Steel plate
- 56: Steel plate
- 58: Steel plate
- 60: Steel plate
- 62: Steel plate
- 64: Outer toothing
- 66: Friction lining plate
- 68: Friction lining plate
- 70: Friction lining plate
- 72: Friction lining plate
- 74: Friction lining plate
- 76: Inner toothing
- 78: Friction lining carrier
- 80: Friction lining
- 82: Friction lining
- 84: Wave or step peaks
- 86: Wave or step troughs
- 88: Spring device
- 90: Wave or step peaks
- 92: Wave or step troughs

- a: Axial spacing
- b: Width of the friction lining plate
- f: Spring length

## Claims

1. A wet running multiplate clutch (2), preferably a hydraulically actuable multiplate clutch, with a first plate set (48) connected in a rotationally fixed manner to a first plate carrier (18), and with a second plate set (50) connected in a rotationally fixed manner to a second plate carrier (30), wherein the plates (52 to 62, 66 to 74) of the two plate sets (48, 50) are arranged consecutively in an alternating manner in the axial direction (4, 6) and can be brought, preferably directly, into frictional engagement with one other, wherein the first plate set (48) comprises at least one pair of plates consisting of two adjacent plates (52, 54) with an in-between plate (66) of the second plate set (50) and one spring device (88) for providing a first restoring force is provided for the at least one pair of plates, by means of which the two adjacent plates (52, 54) of the pair of plates can be spaced apart from each other in the axial direction (4, 6), **characterized in that** the in-between plate (66) is of elastically deformable or resilient design in the axial direction (4, 6) for providing a second restoring force, when the multiplate clutch (2) is in an open state the two adjacent plates (52, 54) can be spaced apart from each other by the spring device (88)forming an axial spacing (a) which is greater than the width (b) of the unstressed in-between plate (66) in the axial direction (4, 6) and the multiplate clutch (2) can be closed by firstly compressing the adjacent plates (52, 54) merely counter to the first restoring force of the first and second restoring force and by further compressing the adjacent plates (52, 54) counter to the first and second restoring force and **in that** the in-between plate (66) has an undulating or stepped profile in the circumferential direction (12, 14) and/or in the radial direction (8, 10) and **in that**, when the multiplate clutch (2) is closed, the restoring force of the spring device (88) in the axial direction (4, 6) is greater than the restoring force of the elastically deformable or resiliently designed in-between plate (66) in the axial direction (4, 6).

2. The wet running multiplate clutch (2) as claimed in claim 1, **characterized in that** furthermore at least one spring device is provided for at least one pair of plates consisting of two adjacent plates (66, 68) of the second plate set (50), by means of which, when the multiplate clutch (2) is in an open state, the two adjacent plates (66, 68) of the pair of plates can be spaced apart from each other in the axial direction (4, 6), forming an axial spacing which is greater than the width of the in-between and optionally unstressed plate (54) of the first plate set (48) in the axial direction (4, 6).

3. The wet running multiplate clutch (2) as claimed in either of claims 1 and 2, **characterized in that** at least one spring device (88) is provided for all of the pairs of plates consisting of adjacent plates (52, 54; 54, 56; 56, 58; 58, 60; 60, 62; 66, 68; 68, 70; 70, 72; 72, 74) of the first and/or second plate set (48, 50).

4. The wet running multiplate clutch (2) as claimed in one of the preceding claims, **characterized in that** the spring device (88) is arranged in the axial direction (4, 6), preferably completely, between the mutually facing sides of the plates (52, 54; 66, 68) of the respective pair of plates and can be or is particularly preferably supported directly on the mutually facing sides of the plates (52, 54; 66, 68) of the pair of plates.

5. The wet running multiplate clutch (2) as claimed in one of the preceding claims, **characterized in that** the spring length (f) of the unstressed spring device (88) in the axial direction (4, 6) is greater than the width (b) of the in-between and optionally unstressed plate (66) in the axial direction (4, 6), the spring length (f) preferably being at least 110% or 125%, particularly preferably being at maximum 150%, of the width (b) of the in-between plate (66).

6. The wet running multiplate clutch (2) as claimed in one of the preceding claims, **characterized in that** the spring device (88) is arranged in the radial direction (8, 10), preferably completely, between the first and second plate carrier (18, 30), particularly preferably between the plate-supporting sections (22, 32) of the first and second plate carrier (18, 30).

7. The wet running multiplate clutch (2) as claimed in one of the preceding claims, **characterized in that** the spring device (88) can be or is supported in the radial direction (8, 10) on the first or second plate carrier (18, 30), preferably on the plate-supporting section (22, 32) of the respective plate carrier (18, 30), the spring device (88) being connected, preferably in a rotationally fixed manner, particularly preferably in a form-fitting manner, to the respective plate carrier (18, 30).

8. The wet running multiplate clutch (2) as claimed in one of the preceding claims, **characterized in that** the spring device (88) is of annular or annular-disk-shaped design, the spring device (88) preferably being composed of metal, particularly preferably of steel.

9. The wet running multiplate clutch (2) as claimed in one of the preceding claims, **characterized in that** the spring device (88) is formed separately from the in-between plate (66), and is preferably spaced apart therefrom, the annular or annular-disk-shaped spring device (88) particularly preferably being arranged in a nested fashion in the radial direction (8, 10) with the in-between plate (66).

10. The wet running multiplate clutch (2) as claimed in one of the preceding claims, **characterized in that** the spring device (88) is of elastically deformable or resilient design in the axial direction (4, 6), preferably also in the circumferential direction (12, 14) and/or radial direction (8, 10), the annular or annular-disk-shaped spring device (88) having an undulating or stepped profile, particularly preferably a sinusoidal profile, preferably in the circumferential direction (12, 14) and/or in the radial direction (8, 10), and/or being of conical design in the axial direction (4, 6).

11. The wet running multiplate clutch (2) as claimed in one of the preceding claims, **characterized in that** the in-between plate (66) is also of elastically deformable or resilient design in the circumferential direction (12, 14) and/or radial direction (8, 10) and/or **in that** the in-between plate (66) has a sinusoidal profile, in the circumferential direction (12, 14) and/or in the radial direction (8, 10).

12. The wet running multiplate clutch (2) as claimed in one of the preceding claims, **characterized in that** the spring stiffness of the spring device (88) is smaller than, greater than or equal to the spring stiffness of the elastically deformable or resiliently designed in-between plate (66) in the axial direction (4, 6).

13. The wet running multiplate clutch (2) as claimed in one of claims 10 to 12, **characterized in that** the undulating or stepped profile of the spring device (88) and/or of the in-between plate (66) has at least two, preferably three, particularly preferably more than three, wave or step peaks (90; 84) and the same number of wave or step troughs (92; 86). (88) and/or of the in-between plate (66) has at least two, preferably three, particularly preferably more than three, wave or step peaks (90; 84) and the same number of wave or step troughs (92; 86).

14. The wet running multiplate clutch (2) as claimed in one of the preceding claims, **characterized in that** the plates of the first or second plate set (48, 50), preferably of the first plate set (48), are designed as steel plates (52 to 62), particularly preferably as flat steel plates (52 to 62), while the plates of the other plate set (50, 48), preferably of the second plate set (50), are designed as friction lining plates (66 to 74), preferably as friction lining plates (66 to 74) having an undulating or stepped profile and having a friction lining carrier (78) and at least one friction lining (80, 82) arranged on the friction lining carrier (78), the friction lining carrier (78) particularly preferably having an undulating or stepped profile which is followed by the friction lining (80, 82) arranged thereon.

## Patentansprüche

1. Nasslaufende Lamellenkupplung (2), vorzugsweise eine hydraulisch betätigbare Lamellenkupplung, mit einem ersten Lamellensatz (48), der drehfest mit einem ersten Lamellenträger (18) verbunden ist, und einem zweiten Lamellensatz (50), der drehfest mit einem zweiten Lamellenträger (30) verbunden ist, wobei die Lamellen (52 bis 62, 66 bis 74) der beiden Lamellensätze (48, 50) in axialer Richtung (4, 6) wechselweise hintereinander angeordnet und miteinander, vorzugsweise unmittelbar, in Reibeingriff bringbar sind, wobei der erste Lamellensatz (48) zumindest ein Lamellenpaar aus zwei benachbarten Lamellen (52, 54) mit einer zwischenliegenden Lamelle (66) des zweiten Lamellensatzes (50) umfasst und eine Federeinrichtung (88) zum Bereitstellen einer ersten Rückstellkraft für das zumindest eine Lamellenpaar vorgesehen ist, mittels derer die beiden benachbarten Lamellen (52, 54) des Lamellenpaars in axialer Richtung (4, 6) voneinander beabstandbar sind, **dadurch gekennzeichnet, dass** die zwischenliegende Lamelle (66) in axialer Richtung (4, 6) zum Bereitstellen einer zweiten Rückstellkraft elastisch verformbar oder federnd ausgebildet ist, die beiden benachbarten Lamellen (52, 54) bei geöffneter Lamellenkupplung (2) durch die Federeinrichtung (88) unter Ausbildung eines Axialabstandes (a) voneinander beabstandbar sind, der größer als die Breite (b) der entspannten zwischenliegenden Lamelle (66) in axialer Richtung (4, 6) ist, und die Lamellenkupplung (2) durch anfängliches Zusammendrücken der benachbarten Lamellen (52, 54) lediglich entgegen der ersten Rückstellkraft der ersten und zweiten Rückstellkraft und durch weiteres Zusammendrücken der benachbarten Lamellen (52, 54) entgegen der ersten und zweiten Rückstellkraft geschlossen werden kann und dass die zwischenliegende Lamelle (66) in Umfangsrichtung (12, 14) oder/und in radialer Richtung (8, 10) einen wellen- oder stufenartigen Verlauf aufweist und dass die Rückstellkraft der Federeinrichtung (88) in axialer Richtung (4, 6) bei geschlossener Lamellenkupplung (2) größer als die Rückstellkraft der elastisch verformbaren oder federnd ausgebildeten zwischenliegenden Lamelle (66) in axialer Richtung (4, 6) ist.

2. Nasslaufende Lamellenkupplung (2) nach Anspruch 1, **dadurch gekennzeichnet, dass** ferner mindestens eine Federeinrichtung für zumindest ein Lamellenpaar aus zwei benachbarten Lamellen (66, 68) des zweiten Lamellensatzes (50) vorgesehen ist, mittels derer die beiden benachbarten Lamellen (66, 68) des Lamellenpaars bei geöffneter Lamellenkupplung (2) unter Ausbildung eines Axialabstandes in axialer Richtung (4, 6) voneinander beabstandbar sind, der größer als die Breite der zwischenliegenden und gegebenenfalls entspannten Lamelle (54) des ersten Lamellensatzes (48) in axialer Richtung (4, 6) ist.

3. Nasslaufende Lamellenkupplung (2) nach einem der Ansprüche 1 oder 2, **dadurch gekennzeichnet, dass** mindestens eine Federeinrichtung (88) für alle Lamellenpaare aus benachbarten Lamellen (52, 54; 54, 56; 56, 58; 58, 60; 60, 62; 66, 68; 68, 70; 70, 72;
72, 74) des ersten oder/und zweiten Lamellensatzes (48, 50) vorgesehen ist.

4. Nasslaufende Lamellenkupplung (2) nach einem der vorangehenden Ansprüche, **dadurch gekennzeichnet, dass** die Federeinrichtung (88) in axialer Richtung (4, 6), vorzugsweise vollständig, zwischen den einander zugewandten Seiten der Lamellen (52, 54;
66, 68) des jeweiligen Lamellenpaars angeordnet und besonders bevorzugt unmittelbar an den einander zugewandten Seiten der Lamellen (52, 54; 66, 68) des Lamellenpaars abstützbar oder abgestützt ist.

5. Nasslaufende Lamellenkupplung (2) nach einem der vorangehenden Ansprüche, **dadurch gekennzeichnet, dass** die Federlänge (f) der entspannten Federeinrichtung (88) in axialer Richtung (4, 6) größer als die Breite (b) der zwischenliegenden und gegebenenfalls entspannten Lamelle (66) in axialer Richtung (4, 6) ist, wobei die Federlänge (f) vorzugsweise mindestens 110 % oder 125 %, besonders bevorzugt maximal 150 %, der Breite (b) der zwischenliegenden Lamelle (66) beträgt.

6. Nasslaufende Lamellenkupplung (2) nach einem der vorangehenden Ansprüche, **dadurch gekennzeichnet, dass** die Federeinrichtung (88) in radialer Richtung (8, 10), vorzugsweise vollständig, zwischen dem ersten und zweiten Lamellenträger (18, 30), besonders bevorzugt zwischen den Lamellentragabschnitten (22, 32) des ersten und zweiten Lamellenträgers (18, 30), angeordnet ist.

7. Nasslaufende Lamellenkupplung (2) nach einem der vorangehenden Ansprüche, **dadurch gekennzeichnet, dass** die Federeinrichtung (88) in radialer Richtung (8, 10) an dem ersten oder zweiten Lamellenträger (18, 30), vorzugsweise an dem Lamellentragabschnitt (22, 32) des jeweiligen Lamellenträgers (18, 30), abstützbar oder abgestützt ist, wobei die Federeinrichtung (88) vorzugsweise drehfest, besonders bevorzugt formschlüssig, mit dem jeweiligen Lamellenträger (18, 30) verbunden ist.

8. Nasslaufende Lamellenkupplung (2) nach einem der vorangehenden Ansprüche, **dadurch gekennzeichnet, dass** die Federeinrichtung (88) ringförmig oder ringscheibenförmig ausgebildet ist, wobei die Federeinrichtung (88) vorzugsweise aus Metall, besonders bevorzugt aus Stahl, besteht.

9. Nasslaufende Lamellenkupplung (2) nach einem der vorangehenden Ansprüche, **dadurch gekennzeichnet, dass** die Federeinrichtung (88) separat von der zwischenliegenden Lamelle (66) ausgebildet, vorzugsweise von dieser beabstandet, ist, wobei die ringförmige oder ringscheibenförmige Federeinrichtung (88) besonders bevorzugt in radialer Richtung (8, 10) mit der zwischenliegenden Lamelle (66) geschachtelt angeordnet ist.

10. Nasslaufende Lamellenkupplung (2) nach einem der vorangehenden Ansprüche, **dadurch gekennzeichnet, dass** die Federeinrichtung (88) in axialer Richtung (4, 6), vorzugsweise auch in Umfangsrichtung (12, 14) oder/und radialer Richtung (8, 10), elastisch verformbar oder federnd ausgebildet ist, wobei die ringförmige oder ringscheibenförmige Federeinrichtung (88) vorzugsweise in Umfangsrichtung (12, 14) oder/und in radialer Richtung (8, 10) einen wellen- oder stufenartigen, besonders bevorzugt einen sinusförmigen, Verlauf aufweist oder/und in axialer Richtung (4, 6) konisch ausgebildet ist.

11. Nasslaufende Lamellenkupplung (2) nach einem der vorangehenden Ansprüche, **dadurch gekennzeichnet, dass** die zwischenliegende Lamelle (66) in Umfangsrichtung (12, 14) oder/und radialer Richtung (8, 10) ebenfalls elastisch verformbar oder federnd ausgebildet ist oder/und dass die zwischenliegende Lamelle (66) in Umfangsrichtung (12, 14) oder/und in radialer Richtung (8, 10) einen sinusförmigen, Verlauf aufweist.

12. Nasslaufende Lamellenkupplung (2) nach einem der vorangehenden Ansprüche, **dadurch gekennzeichnet, dass** die Federsteifigkeit der Federeinrichtung (88) in axialer Richtung (4, 6) kleiner als die, größer als die oder gleich der Federsteifigkeit der elastisch verformbaren oder federnd ausgebildeten zwischenliegenden Lamelle (66) in axialer Richtung (4, 6) ist.

13. Nasslaufende Lamellenkupplung (2) nach einem der Ansprüche 10 bis 12, **dadurch gekennzeichnet, dass** der wellen- oder stufenartige Verlauf der Federeinrichtung (88) oder/und der zwischenliegenden Lamelle (66) mindestens zwei, vorzugsweise drei, besonders bevorzugt mehr als drei, Wellen- oder Stufenberge (90; 84) und die gleiche Anzahl an Wellen- oder Stufentälern (92; 86) aufweist.

14. Nasslaufende Lamellenkupplung (2) nach einem der vorangehenden Ansprüche, **dadurch gekennzeichnet, dass** die Lamellen des ersten oder zweiten Lamellensatzes (48, 50), vorzugsweise des ersten Lamellensatzes (48), als Stahllamellen (52 bis 62), besonders bevorzugt als flache Stahllamellen (52 bis 62), ausgebildet sind, während die Lamellen des anderen Lamellensatzes (50, 48), vorzugsweise des zweiten Lamellensatzes (50), als Reibbelaglamellen (66 bis 74), vorzugsweise als Reibbelaglamellen (66 bis 74) mit wellen- oder stufenartigem Verlauf, ausgebildet sind, die einen Reibbelagträger (78) und mindestens einen auf dem Reibbelagträger (78) angeordneten Reibbelag (80, 82) aufweisen, wobei besonders bevorzugt der Reibbelagträger (78) einen wellen- oder stufenartigen Verlauf aufweist, dem der darauf angeordnete Reibbelag (80, 82) folgt.

## Revendications

1. Embrayage à disques multiples à huile (2), de manière particulièrement préférable embrayage à disques multiples pouvant être actionné par voie hydraulique, comportant un premier ensemble de disques (48) raccordés d'une manière fixe en rotation à un premier support de disques (18), et comportant un second ensemble de disques (50) raccordés d'une manière fixe en rotation à un second support de disques (30), les disques (52 à 62, 66 à 74) des deux ensembles de disques (48, 50) étant agencés successivement de manière alternée dans la direction axiale (4, 6) et pouvant être amenés, de préférence directement, en contact de friction les uns avec les autres, le premier ensemble de disques (48) comprenant au moins une paire de disques constituée de deux disques adjacents (52, 54) avec un disque intermédiaire (66) du second ensemble de disques (50) et un dispositif formant ressort (88) destiné à produire une première force de rappel étant prévu pour l'au moins une paire de disques, au moyen duquel les deux disques adjacents (52, 54) de la paire de disques peuvent être espacés l'un de l'autre dans la direction axiale (4, 6), **caractérisé en ce que** le disque intermédiaire (66) est conçu de façon à être déformable de manière élastique ou souple dans la direction axiale (4, 6) afin de produire une seconde force de rappel, lorsque l'embrayage à disques multiples (2) se trouve dans un état ouvert, les deux disques adjacents (52, 54) peuvent être espacés l'un de l'autre par le dispositif formant ressort (88) de sorte qu'ils forment un espacement axial (a) qui est supérieur à la largeur (b) du disque intermédiaire (66) non soumis à contrainte dans la direction axiale (4, 6) et l'embrayage à disques multiples (2) peut être fermé en comprimant d'abord les disques adjacents (52, 54) simplement à l'encontre de la première force de rappel parmi les première et seconde forces de rappel et en comprimant ensuite les disques adjacents (52, 54) à l'encontre des première et seconde forces de rappel et **en ce que** le disque intermédiaire (66) présente un profil ondulé ou étagé dans la direction circonférentielle (12, 14) et/ou dans la direction radiale (8, 10) et **en ce que**, lorsque l'embrayage à disques multiples (2) est fermé, la force de rappel du dispositif formant ressort (88) dans la direction axiale (4, 6) est supérieure à la force de rappel du disque intermédiaire (66) conçu de façon à être déformable de manière élastique ou souple dans la direction axiale (4, 6).

2. Embrayage à disques multiples à huile (2) selon la revendication 1, **caractérisé en ce que**, en outre, au moins un dispositif formant ressort est prévu pour au moins une paire de disques constituée de deux disques adjacents (66, 68) du second ensemble de disques (50), au moyen duquel, lorsque l'embrayage à disques multiples (2) se trouve dans un état ouvert, les deux disques adjacents (66, 68) de la paire de disques peuvent être espacés l'un de l'autre dans la direction axiale (4, 6), de sorte qu'ils forment un espacement axial qui est supérieur à la largeur du disque intermédiaire (54) éventuellement non soumis à contrainte du premier ensemble de disques (48) dans la direction axiale (4, 6).

3. Embrayage à disques multiples à huile (2) selon l'une ou l'autre des revendications 1 et 2, **caractérisé en ce qu'**au moins un dispositif formant ressort (88) est prévu pour toutes les paires de disques constituées de disques adjacents (52, 54 ; 54, 56 ; 56, 58 ; 58, 60 ; 60, 62 ; 66, 68 ; 68, 70 ; 70, 72 ; 72, 74) du premier et/ou du second ensemble de disques (48, 50).

4. Embrayage à disques multiples à huile (2) selon l'une des revendications précédentes, **caractérisé en ce que** le dispositif formant ressort (88) est disposé dans la direction axiale (4, 6), de préférence complètement, entre les faces en regard des disques (52, 54 ; 66, 68) de la paire de disques respective et peut être ou est, de façon particulièrement préférable, supporté directement sur les faces en regard des disques (52, 54 ; 66, 68) de la paire de disques.

5. Embrayage à disques multiples à huile (2) selon l'une des revendications précédentes, **caractérisé en ce que** la longueur de ressort (f) du dispositif formant ressort (88) non soumis à contrainte dans la direction axiale (4, 6) est supérieure à la largeur (b) du disque intermédiaire (66) éventuellement non soumis à contrainte dans la direction axiale (4, 6), la longueur de ressort (f) valant de préférence au moins 110 % ou 125 %, de manière particulièrement préférable valant au maximum 150 %, de la largeur (b) du disque intermédiaire (66).

6. Embrayage à disques multiples à huile (2) selon l'une des revendications précédentes, **caractérisé en ce que** le dispositif formant ressort (88) est disposé dans la direction radiale (8, 10), de préférence complètement, entre les premier et second supports de disques (18, 30), de manière particulièrement préférable entre les sections de support de disques (22, 32) des premier et second supports de disques (18, 30).

7. Embrayage à disques multiples à huile (2) selon l'une des revendications précédentes, **caractérisé en ce que** le dispositif formant ressort (88) peut être ou est supporté dans la direction radiale (8, 10) sur le premier ou le second support de disques (18, 30), de préférence sur la section de support de disques (22, 32) du support de disques (18, 30) respectif, le dispositif formant ressort (88) étant raccordé, de préférence d'une manière fixe en rotation, de manière particulièrement préférable avec engagement géométrique, au support de disques (18, 30) respectif.

8. Embrayage à disques multiples à huile (2) selon l'une des revendications précédentes, **caractérisé en ce que** le dispositif formant ressort (88) est conçu de façon à présenter une forme annulaire ou de disque annulaire, le dispositif formant ressort (88) étant de préférence composé de métal, de manière particulièrement préférable d'acier.

9. Embrayage à disques multiples à huile (2) selon l'une des revendications précédentes, **caractérisé en ce que** le dispositif formant ressort (88) est formé séparément du disque intermédiaire (66), et est de préférence espacé de celui-ci, le dispositif formant ressort (88) de forme annulaire ou en forme de disque annulaire étant de manière particulièrement préférable disposé en emboîtement dans la direction radiale (8, 10) avec le disque intermédiaire (66).

10. Embrayage à disques multiples à huile (2) selon l'une des revendications précédentes, **caractérisé en ce que** le dispositif formant ressort (88) est conçu de façon à être déformable de manière élastique ou souple dans la direction axiale (4, 6), de préférence également dans la direction circonférentielle (12, 14) et/ou dans la direction radiale (8, 10), le dispositif formant ressort (88) de forme annulaire ou en forme de disque annulaire présentant un profil ondulé ou étagé, de manière particulièrement préférable un profil sinusoïdal, de préférence dans la direction circonférentielle (12, 14) et/ou dans la direction radiale (8, 10), et/ou étant conçu de façon à être conique dans la direction axiale (4, 6).

11. Embrayage à disques multiples à huile (2) selon l'une des revendications précédentes, **caractérisé en ce que** le disque intermédiaire (66) est également conçu de façon à être déformable de manière élastique ou souple dans la direction circonférentielle (12, 14) et/ou dans la direction radiale (8, 10) et/ou **en ce que** le disque intermédiaire (66) présente un profil sinusoïdal dans la direction circonférentielle (12, 14) et/ou dans la direction radiale (8, 10).

12. Embrayage à disques multiples à huile (2) selon l'une des revendications précédentes, **caractérisé en ce que** la raideur de ressort du dispositif formant ressort (88) est inférieure, supérieure ou égale à la raideur de ressort du disque intermédiaire (66) conçu de façon à être déformable de manière élastique ou souple dans la direction axiale (4, 6).

13. Embrayage à disques multiples à huile (2) selon l'une des revendications 10 à 12, **caractérisé en ce que** le profil ondulé ou étagé du dispositif de ressort (88) et/ou du disque intermédiaire (66) comporte au moins deux, de préférence trois, de manière particulièrement préférable plus de trois, saillies d'ondulation ou d'étage (90 ; 84) et le même nombre de creux d'ondulation ou d'étage (92 ; 86) .

14. Embrayage à disques multiples à huile (2) selon l'une des revendications précédentes, **caractérisé en ce que** les disques du premier ou du second ensemble de disques (48, 50), de préférence du premier ensemble de disques (48), sont conçus sous la forme de disques d'acier (52 à 62), de manière particulièrement préférable sous la forme de disques d'acier (52 à 62) plats, tandis que les disques de l'autre ensemble de disques (50, 48), de préférence du second ensemble de disques (50), sont conçus sous la forme de disques à garniture de friction (66 à 74), de préférence sous la forme de disques à garniture de friction (66 à 74) présentant un profil ondulé ou étagé et comportant un support de garniture de friction (78) et au moins une garniture de friction (80, 82) disposée sur le support de garniture de friction (78), le support de garniture de friction (78) présentant de manière particulièrement préférable un profil ondulé ou étagé que suit la garniture de friction (80, 82) disposée sur celui-ci.
